# FASCICULE DE BREVET EUROPEEN

(11) **EP 0 572 716 B1**
(45) Date de publication et mention de la délivrance du brevet: **09.10.1996**
(21) Numéro de dépôt: 92120461.6
(22) Date de dépôt: 01.12.1992
(51) Int. Cl.: B23H 7/02

(54) **Machine d'électroérosion à fil avec pièce à usiner fixe**
Elektroerosive Maschine mit einem befestigten Werkstück
Electric discharge machine with a fixed workpiece

(30) Priorité: 30.05.1992 EP 92201545
(43) Date de publication de la demande: 08.12.1993
(73) Titulaire: CHARMILLES TECHNOLOGIES S.A., 1217 Meyrin 1 (CH)
(72) Inventeur: Lehmann, Hans, CH-1234 Vessy (CH)

(56) Documents cités:
- CH-A- 670 590
- DE-A- 3 524 377
- PATENT ABSTRACTS OF JAPAN vol. 10, no. 304 (M-526)(2360) 16 Octobre 1986 & JP-A-61 117 018 (INOUE JAPAX RES INC) 4 Juin 1986

## Description

La présente invention concerne une machine d'électroérosion à fil avec pièce à usiner fixe dans laquelle les têtes d'usinage comportant les guides-fil sont mobiles dans deux plans parallèles de part et d'autre de la zone d'usinage, grâce à deux systèmes à mouvements croisés, tandis que la pièce à usiner est posée et serrée sur des piliers fixes par rapport au bâti de la machine. Le filélectrode défilant à travers la zone d'usinage, c'est-à-dire la fente découpée dans la pièce à usiner et s'avançant dans celle-ci selon la trajectoire prévue, peut aussi simultanément s'incliner par rapport au plan d'usinage, selon un angle prédéterminé.

Les machines d'électroérosion à fil connues présentent deux types de structure: en C ou à portique (voir l'ouvrage "Elektroerosive Metallbearbeitung (M. Feurer) Würzburg 1983, pages 29 à 31). Dans les deux cas, le bâti comporte un socle qui supporte un bac de travail destiné à recevoir le liquide diélectrique d'usinage; des piliers sont montés sur le fond de ce bac pour recevoir le système de bridage de la pièce à usiner.
- Dans la structure en C, une colonne verticale est liée de façon rigide à ce socle, et deux bras (ou consoles) terminés chacun par une tête d'usinage sont montés en porte-à-faux sur cette colonne : un bras inférieur, fixé à une hauteur appropriée, de façon que la tête inférieure soit disposée entre la pièce à usiner et le fond du bac de travail, et un bras supérieur surplombant le bac de travail et mobile verticalement (mouvement Z) afin que la distance entre la tête d'usinage supérieure et la pièce à usiner soit réglable. Le mouvement relatif entre les têtes d'usinage et la pièce à usiner (mouvement X,Y) est obtenu en général grâce à un système à mouvements croisés monté sur le socle, sous le bac de travail (c'est la pièce à usiner qui est mobile), comme décrit par exemple dans DE 35 24 377; ce système peut aussi être intégré à la colonne (c'est le bras inférieur qui est mobile); l'inclinaison du fil ( c'est-à-dire le mouvement selon les axes U et V de la tête supérieure) est réalisée grâce à un deuxième système à mouvements croisés monté sur le bras supérieur, soit à l'extrémité d'un chariot mobile selon l'axe Z portant la tête d'usinage, soit à l'endroit où il est rattaché à la colonne.
- Dans la structure en portique, deux colonnes ou épaulements s'élèvent de part et d'autre du socle et sont liés de façon rigide à une traverse sur laquelle est monté le bras supérieur, ces derniers surplombant la zone d'usinage et un bac de travail. En général ce bras est non seulement mobile verticalement (mouvement Z) afin que la distance entre la tête d'usinage supérieure et la pièce à usiner soit réglable (comme dans la plupart des machines en C), mais aussi le long de la traverse, selon l'axe X. La pièce à usiner est le plus souvent mobile, au moins selon l'axe Y. Toutefois des machines d'électroérosion à fil construites en portique et avec pièce à usiner fixe, sont connues ( fig. 1 et 2 de FR 2 099 848, par exemple).

Mais que ce soit dans le cas des machines en C ou à portique connues (avec pièce à usiner fixe ou mobile), les mouvements selon U, V restent dépendants du système à mouvements croisés X,Y, ou bien leur amplitude est limitée car les deux systèmes à mouvements croisés (X,Y) et (U,V) sont situés côte à côte (FR 2 099 848); aucune de ces constructions ne permet donc de travailler avec de grandes dépouilles, car l'amplitude de leur système à mouvements croisés (U,V) est limitée. Signalons toutefois deux exceptions : la demande japonaise 61-117018 qui décrit deux systèmes à mouvements superposés et indépendants, mais sans préciser la structure de la machine sur laquelle ils pourraient être montés; la demande du brevet DE 38 41 314 citée plus loin.

Il est bien connu qu'une construction en portique est plus rigide, plus stable, moins sensible aux vibrations que la structure en C. Mais le désavantage de la structure en portique est que la pièce est beaucoup moins accessible que dans une machine en C. C'est pourquoi les machines en portique ont en général un bac de travail avec parois démontables ou télescopiques ou un bac rétractable dans le socle afin de dégager la table de travail portant la pièce à usiner et son système de bridage ou bien elles présentent des moyens pour décaler selon l'axe Y la table de travail portant la pièce à usiner et son système de bridage par rapport aux montants du portique (grâce à un chariot portant le bac et le système de bridage de la pièce à usiner ou grâce à un portique mobile).
Une machine construite en portique, avec pièce à usiner fixe et bac rétractable dans le socle vient d'être décrite dans la demande du brevet DE 38 41 314. Elle a l'avantage de présenter la rigidité des structures en portique et deux systèmes à mouvements croisés totalement indépendants rendant possibles de grandes dépouilles. Mais le volume réservé dans le socle pour recevoir le bac rétractable augmente encore l'encombrement au sol de cette machine par rapport aux machines en C ou à portique connues; celles-ci ont déjà l'inconvénient d'être peu compacte, car il faut toujours prévoir un ou plusieurs réservoirs extérieurs au socle, en particulier pour le liquide diélectrique et pour le fil-électrode usé.
Enfin, d'autres inconvénients des machines à portique avec pièce à usiner fixe sont exposés dans FR 2 099 848 mentionné ci-dessus; il y est préconisé d'utiliser des machines à structure en C avec un système (U,V) dépendant du système (X, Y), plutôt que des machines à portique, et qu' un système (U,V) indépendant du système (X, Y); ceci a donc conduit la demanderesse à rechercher une structure ne présentant plus ces inconvénients des machines en C ou à portique connues.

La présente invention a pour but de pallier ces inconvénients en créant une machine à découper à fil électrode
- de construction mécanique simple et rigide , permettant en particulier d'usiner avec précision des pièces lourdes,
- avec deux systèmes à mouvements croisés totalement indépendants, situés de part et d'autre de la pièce à usiner, permettant de réaliser des dépouilles sans limitation de l'angle d'inclinaison,
- dans laquelle la pièce est accessible de tous côtés et la zone d'usinage dégagée au maximum afin de pouvoir usiner, en utilisant toutes les courses de la machine, des pièces de dimensions beaucoup plus importantes qu'avec les machines connues de taille similaire,
- beaucoup plus compacte que les machines à découper à fil-électrode connues, le volume sous la zone d'usinage étant entièrement libéré jusqu'au pied du socle, de manière à recevoir le fil-électrode et le liquide diélectrique usés.
Par systèmes à mouvements croisés "totalement indépendants", on entend des systèmes qui ne sont reliés par aucune liaison mécanique.

A cet effet, la machine d'électroérosion à fil avec pièce à usiner fixe selon la présente invention ne comporte ni bac d'usinage, ni table de travail; elle a deux bras qui portent chacun l'une des têtes d'usinage guidant le fil-électrode et injectant du liquide d'usinage entre les électrodes, et qui sont montés sur deux systèmes à mouvements croisés totalement indépendants, situés de part et d'autre du plan d'usinage; elle est caractérisée par
- un socle constitué par des éléments verticaux reliés entre eux de manière à délimiter une enceinte ouverte sur une face, en formant comme un "U",
- une traverse fixée sur un ou plusieurs élément(s) de ce socle, sur laquelle sont montés ces deux systèmes à mouvements croisés,
- des piliers fixés directement sur ce socle et destinés à recevoir le système de bridage pour la pièce à usiner, et
- un collecteur pour le liquide diélectrique et le fil-électrode usé, disposé sous ce système de bridage, aux pieds des éléments du socle, dans ce dernier,
le volume s'étendant dans le socle, de la tête d'usinage inférieure jusqu'à ce collecteur étant libre de tout obstacle.

Il s'agit d'une machine à fil sans bac d'usinage et sans table de travail proprement dite; donc, après avoir traversé la fente d'usinage et la tête d'usinage inférieure le fil pénètre directement dans le réceptacle au fond duquel il vient s'accumuler. D' où une grande simplification de la machine: il n'est plus nécessaire de prévoir un système de courroies ou de fluide comprimé pour transporter le fil vers l'arrière de la machine. De plus, ce réceptacle recueille aussi le liquide diélectrique, en particulier celui aspergé par les buses des deux têtes d'usinage dans la fente d'usinage afin de refroidir les électrodes et d'éliminer les déchets ainsi, le cas échéant, que les chutes découpées dans la pièce à usiner; il fait ainsi office de "bac sale" et il n'est plus nécessaire de prévoir des moyens pour vidanger un bac d'usinage.

Le socle de la machine n'est plus un caisson fermé de tous les côtés et surmonté d'une table; il peut ainsi recueillir le diélectrique et le fil usé. On a ainsi une structure présentant moins d'encombrement: il ne faut plus prévoir de réservoirs extérieurs au socle pour le liquide diélectrique et pour le fil-électrode usé ou réserver un volume dans le socle pour recevoir le bac rétractable; tout l'espace compris entre la surface des piliers de bridage et la tête d'usinage supérieure peut être occupé par la pièce à usiner; le mouvement des têtes d'usinage n'est plus limité par les parois d'un bac de travail et il n'y a plus aucun obstacle latéral sur trois côtés; le bras supérieur est mobile selon Y et peut donc ramener la tête supérieure contre la traverse. Ainsi le bridage est grandement facilité et pour une taille donnée de machine, on peut usiner des pièces beaucoup plus hautes, larges et longues (et beaucoup plus lourdes) qu'avec les machines connues de dimensions similaires.

La (ou les) traverse(s) sont fixées de manière amovible ou non selon la variante considérée, sur sur un ou plusieurs éléments du socle, de préférence de manière à former une disposition symétrique. Lorsqu'une traverse est destinée à porter un système à mouvements croisés sous sa face inférieure, on prévoit des épaulements sur les éléments du socle afin de ménager la place nécessaire. Cette structure à un ou plusieurs portiques est très rigide. Le socle ne supporte plus ni bac de travail rempli de liquide diélectrique, ni table de travail. On a ainsi une structure plus rigide et plus simple. De plus la pièce à usiner est fixe et aucun chariot ou coulisseau de système à mouvements croisés n'a à se déplacer en supportant éventuellement une pièce à usiner de poids important; la précision de l'usinage et sa reproductibilité est donc pratiquement indépendante du poids de la pièce à usiner.
Enfin, dans la plupart des modes de réalisation, le bras inférieur prolonge l'un des coulisseaux ou chariots de son système à mouvements croisés ; tout long porte-à-faux est ainsi évité, ce qui assure une bonne rigidité et donc une bonne précision de la découpe.

Par ailleurs, la structure portique n'est pas seulement avantageuse par sa grande rigidité, mais aussi parce qu'elle permet une grande course Z sans élever le coût de la machine.

La suppression du bac de travail a d'autres avantages: disparition des problèmes dûs à une ouverture ou rétractation accidentelle du bac, à une étanchéité défectueuse; suppression des organes et logiciels associés à la vidange et au remplissage de ce bac.
Mais surtout, il est connu que les variations de température du bain de diélectrique contenu dans le bac de travail se transmettent inégalement au bâti de la machine qui se déforme alors de manière incontrôlable. Au contraire, dans la variante de la présente invention où le socle de la machine baigne dans la cuve recevant le liquide diélectrique usé ou est au contact de ce dernier, toute variation de température se transmet uniformément au bâti et donc aux organes de la machine. De plus, l'air ambiant peut circuler librement à travers la zone d'usinage, aucune table ou bac de travail ne lui faisant plus obstacle. Ceci active la dissipation de la chaleur dégagée par l'usinage et uniformise la température de l'appareillage en évitant une modification de la position relative de la pièce à usiner et des têtes d'usinages due à une différence de dilatation, ce qui augmente la précision et la reproductibilité de l'usinage.

Comme le système à mouvements croisés déplaçant la tête d'usinage inférieure selon les axes X1 et Y1 n'est pas relié mécaniquement au système à mouvements croisés déplaçant la tête d'usinage supérieure selon les axes X2 et Y2, le fil peut prendre pratiquement toutes les inclinaisons.
Un coulisseau ou chariot destiné à déplacer la tête d'usinage supérieure selon l'axe vertical Z est en général monté sur le coulisseau ou chariot supérieur du système à mouvements croisés destiné à la déplacer horizontalement selon les axes X2 et Y2.

Selon une première variante, on peut disposer les systèmes à mouvements croisés comme décrit dans la demande de brevet DOS 38 41 314 c'est-à-dire les disposer au-dessus et en-dessous d'une traverse horizontale unique reposant sur deux épaulements du socle.

Mais la présente invention n'est nullement limitée à cette structure particulière, et selon d'autres variantes deux traverses sont fixées chacune sur l'un des éléments du socle formant les branches du U; l'une est fixée sur des épaulements et porte à sa face inférieure le système à mouvements croisés destiné au bras inférieur, tandis que l'autre porte, à sa face supérieure, le système à mouvements croisés destiné au bras supérieur. La même disposition pourrait être réalisée avec une seule traverse qui porterait le système à mouvements croisés destiné au bras inférieur, le système à mouvements croisés destiné au bras supérieur étant fixé directement sur l'élément du socle lui faisant face et de hauteur appropriée. Deux traverses ci-dessus peuvent être fixées sur deux éléments adjacents du socle, l'une portant le système à mouvements croisés destiné au bras inférieur et l'autre le système à mouvements croisés destiné au bras supérieur, ou bien une traverse qui porterait le système à mouvements croisés destiné au bras inférieur pourrait être fixée sur l'un des éléments du socle formant une branche du U, tandis que l'élément adjacent serait surélevé et porterait directement le système à mouvements croisés destiné au bras supérieur. Les deux systèmes à mouvements croisés peuvent être montés de manière que les plans dans lesquels ils actionnent les mouvements des têtes d'usinage soient verticaux, le plan d'usinage étant lui-même vertical. Dans ce cas on ne peut plus parler de tête "supérieure" ou "inférieure".

La ou les traverse(s) et les systèmes à mouvements croisés peuvent être ou non des éléments modulaires interchangeables avec d'autres, de dimensions différentes ou réalisées en matériaux différents.
Le socle peut être réalisé en une seule pièce ou constitué de plusieurs pièces soudées de façon rigide. Les éléments peuvent former un "U" plus ou moins évasé et ne sont pas forcément perpendiculaires. Ils peuvent présenter des profils variés, des épaulements, des rebords, etc.
Les systèmes à mouvements croisés peuvent être de tout type connu, offrant une grande longévité et une bonne précision dans les déplacements : à aiguilles tels des guidages avec double "V" précontraints équipés de cages à aiguilles, à entraînement mécanique, hydraulique ou pneumatique, à glissières et chariots, à coulisseaux et rails, éventuellement avec rattrapage de jeu. Il peuvent être munis sur tous les axes de systèmes anticollision qui détectent, par ex., l'existence d'une force anormale, supérieure à quelques dizaines de kilogrammes. La position réelle de chaque coulisseau ou chariot peut être estimée par des codeurs angulaires placés au bout de la vis déplaçant le coulisseau ou chariot; mais elle est de préférence lue directement au niveau de la pièce, grâce à des règles linéaires digitales (optiques) de précision, ce qui permet de connaître avec précision la trajectoire effectivement découpée dans la pièce. On peut de plus prévoir une correction software de cette position, par ex. par une mesure laser de la précision du positionnement des axes X1, Y1, X2 et Y2 et une introduction dans le software d'une correction personnalisée à la machine.
Un dispositif pour sectionner le fil-électrode usé ou le friser tels que ceux bien connus dans la technique, peut être fixé sur le bras ou la tête d'usinage inférieure.

Selon certains modes d'exécution particulièrement avantageux:
- une séparation peut isoler la zone d'usinage des organes mécaniques actionnant les déplacements des têtes d'usinage, en particulier une paroi ne laissant passer que les bras terminés par les têtes d'usinage. Elle peut être reliée par ex. à d'autres parois s'élevant derrière le socle et même faire partie d'une double cabine, telle que celle décrite dans la demande suisse CH-A 684 883;
- une cabine ou un ensemble de hautes parois avec une partie coulissante latéralement ou en hauteur, telle que décrit dans la demande suisse ci dessus, peut être disposée autour du bâti de la machine, éventuellement des éléments du circuit de diélectrique et même englober la ou les armoires électriques contenant le générateur d'impulsions et la commande numérique; on peut aussi prévoir une cabine dont plusieurs ou toutes les parois peuvent être déplacées d'un seul tenant vers le haut;
- lorsque le réceptacle de fil-électrode et de liquide diélectrique usés est une cuve dans laquelle reposent le socle et les organes du circuit d'alimentation en liquide diélectrique, cette cuve, ainsi que tous les autres équipements de la machine, peuvent être fixés sur le même chassis ou "palette", y compris l'armoire électrique contenant le générateur d'impulsions et la commande numérique. Les divers éléments de la machine sont interconnectés lors du montage en fabrication, ce qui facilite énormément son installation, rend son transport très aisé et diminue les frais d'exploitation, la surface au sol étant beaucoup plus faible que celle des machines connues similaires.

Dans ce qui suit, l'invention est exposée plus en détail à l'aide des dessins représentant seulement l'un des modes d'exécution à titre de simple exemple non limitatif. La machine ainsi représentée peut recevoir toutes modifications de forme et de détail sans pour cela se départir de l'esprit de l'invention.
La fig. 1 est une perspective simplifiée de la face frontale et de l'un des côtés du bâti d'une machine selon la présente invention;
la fig. 2 schématise une variante d'une machine selon la présente invention dans laquelle tous les éléments de la machine, y compris l'armoire électrique et la commande numérique sont disposés sur une même palette;
la fig. 3 illustre une perspective de la face arrière et de l'un des côtés de la machine schématisée à la fig 2.
Les mêmes chiffres de référence sont utilisés dans ces trois figures pour désigner les mêmes organes.

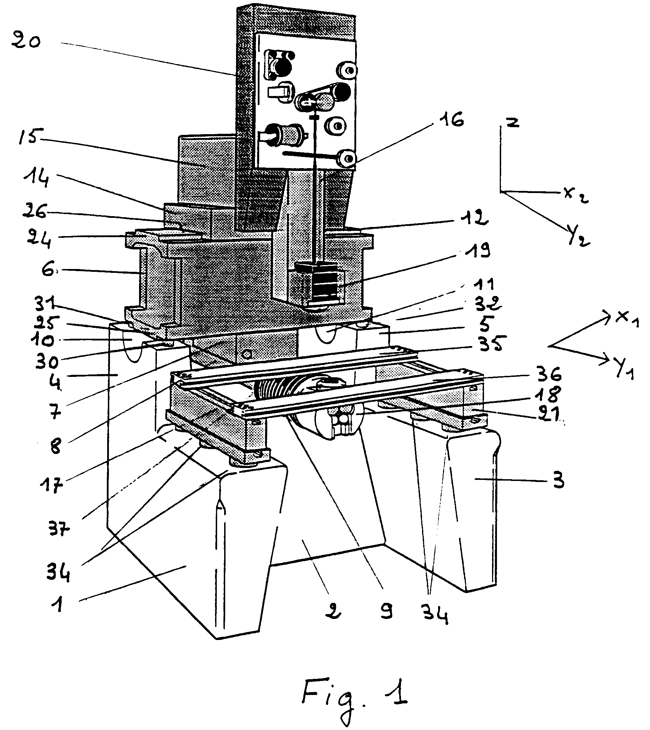

Le bâti de la machine selon la présente invention représentée à la fig. 1 comprend un socle constitué par trois parois perpendiculaires 1, 2 et 3. Les parois 1 et 3 présentent chacune un épaulement 4 et 5 sur lequel s'appuie la traverse 6. La paroi 2 est moins haute que les parois 1 et 3 avec épaulement, de manière à ménager un espace suffisant pour le système à mouvements croisés constitué par les coulisseaux 7 et 8 et le bras inférieur 9. Ce socle est réalisé en Rhenocast (R) (une marque de la société George Fischer désignant un béton polymère). Ce matériau inaltérable, insensible à la rouille, isolant thermique et électrique, est approprié à cet usage, car le socle est destiné à être au contact du diélectrique usé et du filélectrode sortant, encore sous charge électrique, de la tête d'usinage inférieure 18. Sa densité n'est que le tiers de celle de l'acier pour un coefficient de dilatation thermique comparable: 12µm/degré/mn. Ce socle pourrait toutefois être réalisé en tout autre matériau connu pour cet usage: fonte, acier soudé, béton hydraulique, céramique, etc...
Les évidements 10 et 11 ménagés dans les épaulements 4 et 5 permettent de loger la vis de déplacement (non visible à la fig. 1) faisant coulisser le coulisseau 7 et montée à la face inférieure de la traverse 6.
Cette traverse 6 est rectangulaire et creuse ; elle est fixée par les organes de fixation 30, 31, 32 et 33 (ce dernier non visible à la fig. 1) de type connu, coopérant avec des cavités appropriées ménagées dans les épaulements 4 et 5. Elle présente quatre rails disposées le long de sa face supérieure (rails 12 et 13) et inférieure (rails 22 et 23) dont seul le rail 12 est visible sur la fig. 1. Ils sont précontraints, profilés en relief selon un "V" et montés de part et d'autre d'une partie centrale protubérante 24 sur la face supérieure (rails 12 et 13), respectivement 25 sur la face inférieure (rails 22 et 23). Ces rails servent à guider le mouvement transversal du coulisseau 14 le long de l'axe X2 (ou U) et du coulisseau 7 le long de l'axe X1 (ou X). Ces guidages, ainsi que ceux entre les deux coulisseaux d'un même système à mouvements croisés sont du type à double "V" précontraints, équipés de cages à aiguilles. Chacun de ces coulisseaux 7 et 14 coopère avec un coulisseau, respectivement 8 et 15, agencé pour se déplacer orthogonalement à ces axes X1 et X2. Ces systèmes ont une grande rigidité et permettent une découpe précise et reproductible.
Le coulisseau 8 se prolonge par le bras inférieur 9 portant la tête d'usinage inférieure 18. Un soufflet 37 isole le bras inférieur 9 du liquide d'usinage aspergé depuis les têtes d'usinage pour refroidir la zone d'usinage et évacuer les déchets de l'électroérosion.
Le coulisseau 15 se prolonge par le bras supérieur (non visible à la fig. 1) portant un élément vertical 16 contenant un dispositif 20 de type connu et dont seul l'habillage est visible à la fig. 1, faisant coulisser la tête d'usinage supérieure 19 le long d'une crémaillère disposée selon l'axe Z. Cet élément vertical 16 supporte également les divers organes d'alimentation en fil-électrode.

La traverse 6 et les coulisseaux 7, 8, 14 et 15 sont en fonte. Ils pourraient toutefois être réalisés en tout autre matériau connu pour cet usage: acier soudé, fonte, céramique, etc...

Deux piliers 17 et 21 en granit sont fixés grâce à six organes 34 sur la face supérieure des parois 1 et 3 situées en contrebas des épaulements 4 et 5. Ils présentent un rail apte à recevoir les éléments d'un système de bridage de type connu, ici les rails à rainure 35 et 36.
Une paroi protectrice, transparente et mobile 49 referme latéralement l'espace constituant un collecteur 52 menage entre le fond de la cuve 45 et la tête d'usinage 18, dans lequel s'accumule le fil usé.

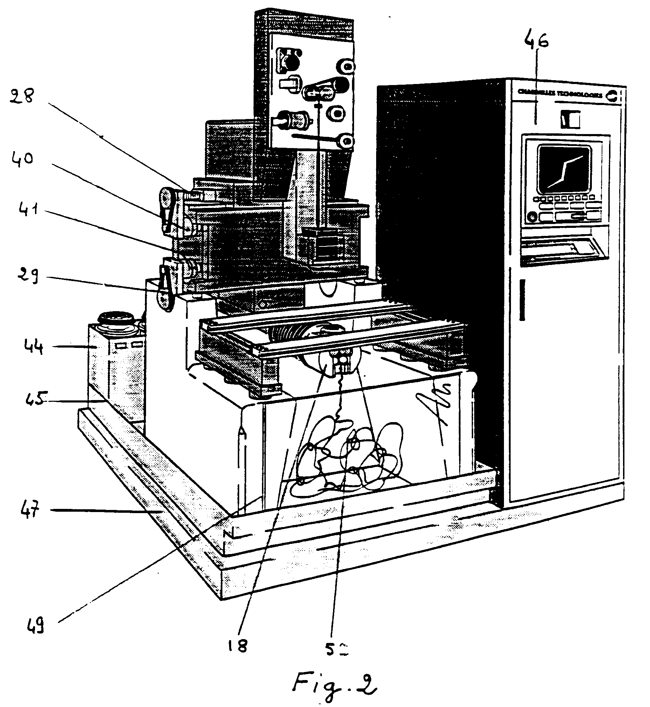

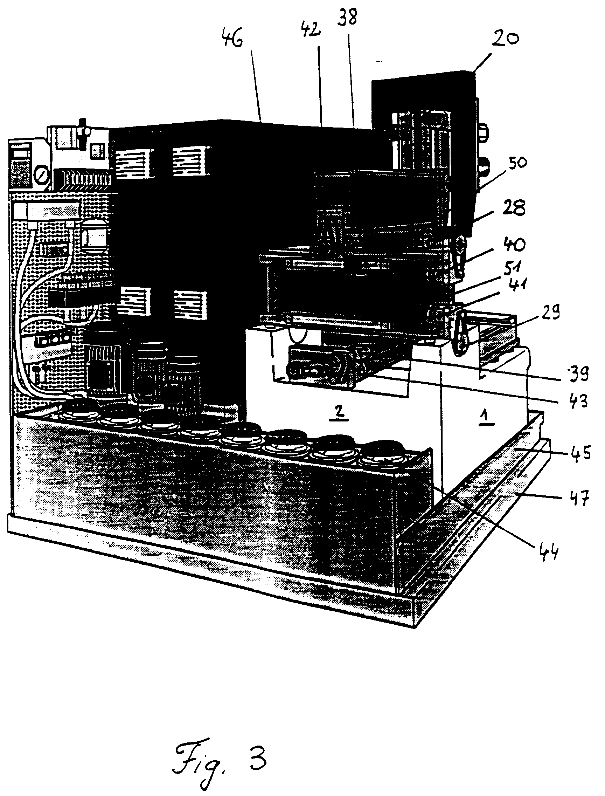

Le fonctionnement des deux systèmes à mouvements croisés composés des coulisseaux 7 et 8, respectivement 14 et 15 est décrit en se référant aux figures 2 et 3 sur lesquelles certains des organes entraînant les coulisseaux 7, 8, 14 et 15 sont visibles.
Chacun des rails de guidage 12, 13, 22 et 23 mentionnés ci-dessus coopère avec un rail au profil de "V" en creux monté le long des coulisseaux 7 et 14 et non visible au dessin, de part et d'autre d'une partie centrale en creux, respectivement 26 sur la face inférieure du coulisseau 4, et 27 (non visible au dessin) sur la face supérieure du coulisseau 7.
De même, le coulisseau 14 présente le long de sa face supérieure et le coulisseau 7 le long de sa face inférieure, une partie centrale protubérante munie de deux rails latéraux profilés en relief selon un "V"; ces rails, (non visibles au dessin), coopèrent avec des rails montés latéralement dans des évidements ménagés le long de la face supérieure du coulisseau 8 et le long de la face inférieure du coulisseau 15.
Des cages à aiguilles sont disposées entre les rails en relief 12, 13, 22 et 23 et les rails en creux coopérant avec eux, ainsi qu'entre les rails guidant les coulisseaux 8 et 15 respectivement sur les coulisseaux 7 et 14. Le mouvement de chacun des coulisseaux 7, 8, 14 et 15 le long de ces rails est actionné par une vis reliée par une courroie à un moteur : vis 28 respectivement 29 et moteur 40 respectivement 41 (voir fig. 2) pour le coulisseau 14 respectivement 7, et vis 38 respectivement 39 et moteur 42 respectivement 43 (voir fig. 3), pour le coulisseau 15 respectivement 8. Ces moteurs 40 et 41 sont abrités dans la traverse 6. Ces moteurs 40 à 43 sont commandés par la commande numérique de la machine. Ainsi les coulisseaux 7 et 14 roulent transversalement, parallèlement au plan frontal de la machine au-dessous, respectivement au-dessus de la traverse 6 et selon l'axe X1, respectivement X2, tandis que les coulisseaux 8 et 15 roulent perpendiculairement au plan frontal de la machine, au-dessous du coulisseau 7 et selon l'axe Y1, respectivement au-dessus du coulisseau 14 et selon l'axe Y2.
Ainsi les têtes d'usinage 18 et 19 peuvent prendre n'importe quelle position relativement à la pièce à usiner, indépendemment l'une de l'autre; il est possible d'incliner le fil de plus de 30° dans une pièce de 400 mm de hauteur. Le mouvement transversal de la tête d'usinage inférieure 18 n'est limité que par la face interne des parois 1 et 3 du socle. Celui de la tête d'usinage supérieure 19 n'est limité que par la longueur de la traverse. Le mouvement selon les axes Y1 et Y2 des têtes d'usinage 18 et 19 n'est limité que par leur épaisseur et, pour la tête supérieure 19, par celle du coulisseau 16.

Dans cet exemple, les deux systèmes à mouvements croisés 7,8 et 14,15 sont identiques. Leur course en X et Y sont respectivement de 400mm et 250mm. On peut usiner une pièce de plus de 500kg, ayant jusqu'à 400mm de haut, 850mm de long et 500mm de large!

Comme illustré aux fig. 2 et 3, le socle de la machine et les éléments nécessaires à l'alimentation et au recyclage du liquide diélectrique, telle la batterie de filtres 44, les dispositifs de ventilation, sont posés dans une cuve 45. Cette cuve 45 et l'armoire électrique 46 contenant le générateur d'impulsions et la commande numérique sont fixés sur la palette commune 47.
Cette machine est réellement très compacte (3 m²). Les dimensions au sol sont de 1,8m x 1,6 et sa hauteur de 2,23m.
Deux règles optiques linéaires 50 et 51 sont visibles à l'arrière de la traverse 6. Elles permettent de lire la position réelle de chaque coulisseau directement au niveau de la pièce, ce qui permet de connaître avec précision la trajectoire effectivement découpée dans la pièce. Des capteurs de pression (non visibles au dessin), sont prévus afin de donner une information sur la pression réelle d'arrosage.
Signalons enfin que la machine de cet exemple permet d'usiner une pièce de 60mm de hauteur, à la vitesse de 250mm²/min, avec un fil stratifié de 0.3mm de diamètre .

## Revendications

1. Machine d'électroérosion à fil, sans bac d'usinage et sans table de travail et avec pièce à usiner fixe, comportant deux bras qui portent chacun l'une des têtes d'usinage (18, 19) guidant le fil-électrode et injectant du liquide d'usinage entre les électrodes, et qui sont montés sur deux systèmes à mouvements croisés (7, 8, 14, 15) totalement indépendants, situés de part et d'autre du plan d'usinage, caractérisée par
- un socle constitué par des éléments verticaux (1-5) reliés entre eux de manière à délimiter une enceinte ouverte sur une face, en formant comme un "U",
- une traverse (6) fixée sur un ou plusieurs élément(s) (4, 5) de ce socle, sur laquelle sont montés ces deux systèmes à mouvements croisés (7, 8, 14, 15),
- des piliers (17, 21) fixés directement sur ce socle (1, 3) et destinés à recevoir le système (35, 36) de bridage pour la pièce à usiner, et
- un collecteur (50) pour le liquide diélectrique et le fil-électrode usés, disposé sous se système de bridage (35, 36), aux pieds des éléments du socle (1-3), dans ce dernier,
le volume s'étendant dans le socle (1-3), de la tête d'usinage inférieure (18) jusqu'à ce collecteur (50), étant libre de tout obstacle.

2. Machine d'électroérosion selon la revendication 1, dans laquelle les deux systèmes à mouvements croisés sont superposés et disposés de part et d'autre d'une traverse (6) horizontale, fixée de façon rigide sur les éléments de ce socle de manière à former un portique.

3. Machine d'électroérosion selon la revendication 1, dans laquelle le bras (9) portant la tête d'usinage inférieure (18) prolonge à l'horizontale l'un des coulisseaux (7, 8, 14, 15) ou chariots de son système à mouvements croisés susceptible de déplacer cette tête selon les axes X1 et Y1 conformément à une trajectoire prédéterminée.

4. Machine d'électroérosion selon la revendication 1, dans laquelle le système à mouvements croisés susceptible de déplacer la tête d'usinage supérieure (19) selon les axes X2 et Y2 conformément à une trajectoire prédéterminée et de manière à incliner le fil selon un angle variant de façon programmée, est identique au système à mouvements croisés susceptible de déplacer la tête d'usinage inférieure (18) selon les axes X1 et Y1.

5. Machine d'électroérosion selon la revendication 1, comportant aussi un dispositif agencé pour déplacer, selon l'axe vertical Z, la tête d'usinage supérieure (19) qui est montée sur le coulisseau supérieur (6) du système à mouvements croisés destiné à la déplacer horizontalement selon les axes X2 et Y2.

6. Machine d'électroérosion selon la revendication 5, dans laquelle le déplacement du dispositif agencé pour déplacer verticalement la tête d'usinage supérieure (19) est programmable pour régler la distance entre cette tête d'usinage supérieure (19) et la pièce de 0 à au moins 400 mm.

7. Machine d'électroérosion selon la revendication 1, dans laquelle chaque système à mouvements croisés se déplace librement d'une extrémité à l'autre de la traverse (6) sur laquelle il est monté, aucun obstacle, tel le rebord d'un bac d'usinage, ne venant limiter sa course.

8. Machine d'électroérosion selon la revendication 1, dans laquelle les systèmes à mouvements croisés sont susceptibles de décaler assez les positions relatives des têtes d'usinage (18, 19) pour que le fil s'incline d'un angle supérieur ou égal à 30°.

9. Machine d'électroérosion selon la revendication 1, dans laquelle le réceptacle pour le fil-électrode et le liquide diélectrique usés est une cuve dans laquelle baigne la base du socle.

10. Machine d'électroérosion selon la revendication 9, dans laquelle cette cuve (45) est fixée sur une palette sur laquelle sont également fixés les autres équipements de la machine, y compris le générateur d'impulsions et la commande numérique contenus dans une ou plusieures armoires électriques (46).

11. Machine d'électroérosion selon la revendication 1, comprenant aussi une paroi agencée pour ne laisser passer que les bras terminés par les têtes d'usinage (18, 19), isolant ainsi la zone d'usinage des systèmes à mouvements croisés et des organes mécaniques les actionnant.

12. Machine d'électroérosion selon l'une des revendications 9 et 10, comprenant aussi une cabine disposée autour de cette cuve (45) et du socle et, le cas échéant, autour de la palette sur laquelle sont également fixés les autres équipements de la machine.

## Claims

1. Electric discharge machine, without a machining tank and without a work table, and having a fixed workpiece, comprising two arms which each carry one of the machining heads (18, 19) guiding the wire electrode and injecting machining liquid between the electrodes, and which are mounted on two totally independent cross-movement systems (7, 8, 14, 15), situated on both sides of the machining plane, characterised by
- a base constituted by vertical elements (4, 5) interlinked so as to delimit an enclosure open on one face, forming a "U",
- a crosspiece (6) fixed on one or more elements (4, 5) of this base, on which are mounted these two cross-movement systems (7, 8, 14, 15),
- columns (17, 21) fixed directly on this base (1, 3) and intended for receiving the workpiece clamping system (35, 36), and
- a collector (50) for the used dielectric liquid and wire electrode, disposed under this clamping system (35, 36), within the base and at the feet of the elements of the base (1-3), the volume extending into the base (1-3) from the lower machining head (18) to this collector (50) being free from all obstacles.

2. Electric discharge machine according to claim 1, in which the two cross-movement systems are superimposed and disposed on both sides of a horizontal crosspiece (6), fixed rigidly on the elements of this base so as to form a gantry.

3. Electric discharge machine according to claim 1, in which the arm (9) carrying the lower machining head (18) horizontally extends one of the slide bars (7, 8, 14, 15) or carriages of its cross-movement system capable of displacing this head along axes X1 and Y1 in conformity with a predetermined trajectory.

4. Electric discharge machine according to claim 1, in which the cross-movement system capable of displacing the upper machining head (19) along axes X2 and Y2 in conformity with a predetermined trajectory and so as to incline the wire according to an angle varying in a programmed manner, is identical to the cross-movement system capable of displacing the lower machining head (18) along axes X1 and Y1.

5. Electric discharge machine according to claim 1, comprising also a device arranged to displace, along the vertical axis Z, the upper machining head (19) which is mounted on the upper slide bar (6) of the cross-movement system intended to displace it horizontally along the axes X2 and Y2.

6. Electric discharge machine according to claim 5, in which the displacement of the device arranged to displace vertically the upper machining head (19) can be programmed to regulate the distance between this upper machining head (19) and the piece from 0 to at least 400 mm.

7. Electric discharge machine according to claim 1, in which each cross-movement system moves freely from one end to the other of the crosspiece (6) on which it is mounted, no obstacle, such as the rim of a machining tank, restricting its path.

8. Electric discharge machine according to claim 1, in which the cross-movement systems are able to offset sufficiently the relative positions of the machining heads (18, 19) so that the wire inclines by an angle above or equal to 30°.

9. Electric discharge machine according to claim 1, in which the container for the used wire electrode and dielectric liquid is a vat into which the bottom of the base dips.

10. Electric discharge machine according to claim 9, in which this vat (45) is fixed on a palette on which are also fixed the other fittings of the machine, including the pulse generator and the numerical control unit contained in one or more electric cabinets (4, 6).

11. Electric discharge machine according to claim 1, comprising also a wall arranged so as to only allow through the arms terminating in the machining heads (18, 19), thus isolating the machining zone from the cross-movement systems and the mechanical elements activating them.

12. Electric discharge machine according to one of claims 9 and 10, also comprising a cabinet disposed around this vat (45) and the base and, if necessary, around the palette on which are also fixed the other fittings of the machine.

## Patentansprüche

1. Draht-Elektroerosionsmaschine ohne Arbeitsbecken und ohne Arbeitstisch und mit festem zu bearbeitendem Werkstück, mit zwei Armen, die jeweils einen Arbeitskopf (18, 19) tragen, welche die Drahtelektrode führen und die Arbeitsflüssigkeit zwischen die Elektroden einspritzen, und die an zwei voneinander vollständig unabhängigen Kreuzbewegungssystemen (7, 8, 14, 15) beidseits der Bearbeitungsebene festgelegt sind, gekennzeichnet durch
- einen Sockel, der durch derart miteinander verbundene Vertikalelemente (1-5) gebildet ist, daß ein U-förmiger, an einer Seite offener Raum gebildet wird,
- eine an einem oder mehreren Elementen (4, 5) dieses Sockels befestigte Querleiste (6), an der die beiden Kreuzbewegungssysteme (7, 8, 14, 15) festgelegt sind,
- direkt an dem Sockel (1, 3) festgelegte Stützen (17, 21), die zur Aufnahme des Spannsystems (35, 36) für das zu bearbeitende Werkstück dienen, und
- einen Sammelbehälter (50) für die verbrauchte dielektrische Flüssigkeit und verbrauchte Drahtelektrode, welcher unter dem Spannsystem (35, 36) an den Füßen der Sockelelemente (1-3) in letzterem angeordnet ist, wobei das sich im Sockel (1-3) vom unteren Arbeitskopf (18) bis zum Sammelbehälter (50) erstreckende Volumen keinerlei Behinderung ausgesetzt ist.

2. Elektroerosionsmaschine nach Anspruch 1, bei der die beiden Kreuzbewegungssysteme übereinander und beidseits einer horizontalen Querleiste (6) angeordnet sind, welche zur Ausbildung einer Brücke starr an den Elementen des Sockels festgelegt ist.

3. Elektroerosionsmaschine nach Anspruch 1, bei der der den unteren Arbeitskopf (18) tragende Arm (9) in der Horizontalen einen Schlitten (7, 8, 14, 15) oder Wagen seines Kreuzbewegungssysteme verlängert, welches dazu geeignet ist, diesen Kopf entlang der X1- und Y1-Achsen entsprechend einer vorgegebenen Bahn zu bewegen.

4. Elektroerosionsmaschine nach Anspruch 1, in der das Kreuzbewegungssystem, welches den oberen Arbeitskopf (19) entlang der X2- und Y2-Achsen entsprechend einer vorgegebenen Bahn verlagern kann und den Draht entsprechend einem vorprogrammierten, veränderbaren Winkel neigen kann, identisch dem Kreuzbewegungssystem ist, welches den unteren Arbeitskopf (18) entlang der X1- und Y1-Achsen verlagern kann.

5. Elektroerosionsmaschine nach Anspruch 1, welche ferner eine zum Verlagern des oberen Arbeitskopfes (19) entlang der Vertikalachse Z angeordnete Einrichtung aufweist, wobei der obere Arbeitskopf (19) an dem oberen Schlitten (15) des Kreuzbewegungssystems zum horizontalen Verlagern entlang der X2- und Y2-Achsen festgelegt ist.

6. Elektroerosionsmaschine nach Anspruch 5, bei der die Verlagerung der Einrichtung zum Vertikalverlagern des oberen Arbeitskopfes (19) programmierbar ist, um den Abstand zwischen dem oberen Arbeitskopf (19) und dem Werkstück von 0 bis zumindest 400 mm zu regeln.

7. Elektroerosionsmaschine nach Anspruch 1, bei der sich jedes Kreuzbewegungssystem frei von einem Ende zum anderen der Querleiste (6) verlagert, an der es festgelegt ist, ohne daß ein Hindernis, wie der Rand eines Arbeitsbeckens, seinen Lauf behindert.

8. Elektroerosionsmaschine nach Anspruch 1, bei der die Kreuzbewegungssysteme dazu geeignet sind, die Positionen der Arbeitsköpfe (18, 19) relativ zueinander ausreichend zu verändern, damit sich der Draht um einen Winkel höher oder gleich 30° neigt.

9. Elektroerosionsmaschine nach Anspruch 1, bei der der Aufnahmebehälter für die verbrauchte Drahtelektrode und die verbrauchte dielektrische Flüssigkeit eine Wanne ist, in die die Sockelbasis eintaucht.

10. Elektroerosionsmaschine nach Anspruch 9, bei der die Wanne (45) auf einer Palette festgelegt ist, an der gleichermaßen die anderen Ausrüstungsgegenstände der Maschine einschließlich des Impulsgenerators und der numerischen Steuerung, welche in einem oder mehreren Schaltschränken (16) enthalten sind, festgelegt sind.

11. Elektroerosionsmaschine nach Anspruch 1, gekennzeichnet durch eine Wand, die derart ausgebildet ist, daß sie lediglich die in den Arbeitsköpfen (18, 19) endenden Arme passieren läßt und so die Arbeitszone der Kreuzbewegungssysteme und der sie antreibenden mechanischen Einrichtungen isoliert.

12. Elektroerosionsmaschine nach einem der Ansprüche 9 und 10, gekennzeichnet durch eine um die Wanne (45) und den Sockel und gegebenenfalls die Palette, auf der auch die anderen Ausrüstungsgegenstände der Maschine festgelegt sind, angeordnete Zelle.
